(19) Europäisches Patentamt
European Patent Office
Office européen des brevets

(11) **EP 4 428 499 A1**

(12) **EUROPEAN PATENT APPLICATION**

(43) Date of publication:
**11.09.2024 Bulletin 2024/37**

(21) Application number: **24161334.8**

(22) Date of filing: **05.03.2024**

(51) International Patent Classification (IPC):
**G01F 1/32** *(2022.01)* **G01F 1/66** *(2022.01)*
**G01F 15/04** *(2006.01)*

(52) Cooperative Patent Classification (CPC):
**G01F 1/666; G01F 1/3218; G01F 15/043**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.03.2023 US 202363450045 P**

(71) Applicant: **The Regents of The University of Michigan**
**Ann Arbor, MI 48109-2590 (US)**

(72) Inventors:
• **Cetiner, Mustafa S.**
  **Lexington, 02421 (US)**
• **Mao, Jiaxin**
  **Ann Arbor, 48105 (US)**
• **Manera, Annalisa**
  **5415 Nussbaumen AG (CH)**
• **Petrov, Victor**
  **5200 Brugg AG (CH)**

(74) Representative: **Witte, Weller & Partner**
**Patentanwälte mbB**
**Postfach 10 54 62**
**70047 Stuttgart (DE)**

(54) **GAS FLOW METER ASSEMBLY AND PASSIVE ACOUSTIC GAS WAVE GENERATOR**

(57)    A passive acoustic gas wave generator of a gas pipe and a tube-in-tube construction thereof are presented. The passive acoustic gas wave generator is a component of a larger acoustic gas flow meter assembly. The tube-in-tube construction eases installation in application and use, and particularly in applications exhibiting harsh and extreme conditions such as in nuclear power reactors. In an implementation, the passive acoustic gas wave generator has a tube body and a support structure. The tube body has a tube gas flow passage and a multitude of corrugations residing at an inner surface thereof. The corrugations induce a phenomenon known-as vortex shedding within a gas flow stream passing through the tube gas flow passage. The support structure centrally locates the tube gas flow passage relative to a pipe gas flow passage of the gas pipe.

FIG. 1

EP 4 428 499 A1

**Description**

TECHNICAL FIELD

This disclosure relates generally to gas flow meter components and assemblies and, more particularly, relates to measuring gas flow rates in high temperature and high flow rate gas pipes, as well as in other gas pipes.

BACKGROUND

Gas flow meters measure gas flow rates and are equipped in a multitude of applications. In general, determining and knowing gas flow rates in a particular application is useful for enhanced operational efficiencies in the accompanying processes, equipment, or both. There are various types of gas flow meters that make measurements based on varying principles of operation. But measuring gas flow rates in applications with harsh and extreme conditions often presents unique challenges. High flow rates and high operating temperatures, for instance, can hinder effective measurement capabilities in conventional gas flow meters. Similarly, harsh chemicals that are frequently used in processing facilities - as well as high neutron flux and gamma fields found in nuclear reactor applications - can cause measurement capability issues in conventional gas flow meters, as yet additional examples.

SUMMARY

In an embodiment, a passive acoustic gas wave generator of a gas pipe may include a tube body and a support structure. The tube body has a tube gas flow passage. The tube gas flow passage spans between an inlet opening and an outlet opening. The tube body has a multitude of corrugations. The corrugations reside at an inner surface of the tube body. The support structure extends from an outer surface of the tube body and extends to an inside surface of the accompanying gas pipe. The support structure serves to locate the tube gas flow passage generally centrally with respect to a pipe gas flow passage of the accompanying gas pipe.

In an embodiment, a tube-in-tube acoustic gas flow meter assembly of a gas pipe may include a passive acoustic gas wave generator, an acoustic emission sensor, and a temperature sensor. The passive acoustic gas wave generator has a tube body and a support structure. A tube gas flow passage resides in the tube body and spans between an inlet opening and an outlet opening. A multitude of corrugations are disposed at an inner surface of the tube body. The support structure extends from an outer surface of the tube body and extends to an inside surface of the gas pipe. The support structure serves to locate the tube gas flow passage of the tube body generally centrally with respect to a pipe gas flow passage of the gas pipe. An annular clearance resides between an outer surface of the tube body and the inside surface of the gas pipe. The acoustic emission sensor is located at an outside surface of the gas pipe and near the passive acoustic gas wave generator. The temperature sensor is located within the tube gas flow passage.

In an embodiment, a tube-in-tube acoustic gas flow meter assembly of a gas pipe may include a passive acoustic gas wave generator, an acoustic emission sensor, a temperature sensor, a controller, and the gas pipe. The passive acoustic gas wave generator has a tube body and a multitude of fins. A tube gas flow passage resides in the tube body and spans between an inlet opening and an outlet opening. A multitude of corrugations are disposed at an inner surface of the tube body. The fins extend from an outer surface of the tube body and extend to an inside surface of the gas pipe. The fins serve to locate the tube gas flow passage of the tube body generally centrally with respect to a pipe gas flow passage of the gas pipe. An annular clearance resides between an outer surface of the tube body and the inside surface of the gas pipe. The acoustic emission sensor is located at an outside surface of the gas pipe and near the passive acoustic gas wave generator. The temperature sensor is located within the tube gas flow passage. The controller is electrically coupled to the acoustic emission sensor and is electrically coupled to the temperature sensor. The gas pipe has a smooth section that resides at the inside surface thereof. The smooth section is present at least near a location of the passive acoustic gas wave generator.

In an embodiment, a passive acoustic gas wave generator of a gas pipe and a tube-in-tube construction thereof are presented. The passive acoustic gas wave generator is a component of a larger acoustic gas flow meter assembly. The tube-in-tube construction eases installation in application and use, and particularly in applications exhibiting harsh and extreme conditions such as in nuclear power reactors. In an implementation, the passive acoustic gas wave generator has a tube body and a support structure. The tube body has a tube gas flow passage and a multitude of corrugations residing at an inner surface thereof. The corrugations induce a phenomenon known-as vortex shedding within a gas flow stream passing through the tube gas flow passage. The support structure centrally locates the tube gas flow passage relative to a pipe gas flow passage of the gas pipe.

BRIEF DESCRIPTION OF THE DRAWINGS

Exemplary embodiments will hereinafter be described in conjunction with the appended drawings, wherein like designations denote like elements, and wherein:

FIG. 1 is a schematic view of an embodiment of a passive acoustic gas wave generator;

FIG. 2 is a schematic view of a high-temperature gas-cooled reactor application which can incorporate one or more of the passive acoustic gas wave generators of FIG. 1;

FIG. 3 is a schematic view of an experimental setup per an example;

FIG. 4A is a graph of a recorded signal per an example experiment at a mass flow rate (m) of $4.898 \times 10^{-3}$ kg/s, with time in seconds on an x-axis and magnitude on a y-axis;

FIG. 4B is a graph of frequency spectrum per the example experiment at a mass flow rate ($\dot{m}$) of $4.898 \times 10^{-3}$ kg/s, with frequency in hertz on an x-axis and magnitude on a y-axis;

FIG. 5 is a graph demonstrating a peak frequency versus flow rate relationship, with flow rate in kilograms per second on an x-axis and peak frequency in kilohertz on a y-axis;

FIG. 6A is a graph presenting a histogram for peak frequency, with resonance mode on an x-axis and frequency occurrence on a y-axis;

FIG. 6B is a graph presenting a gradient for peak frequency to flow rate, with flow rate in kilograms per second on an axis;

FIG. 7 shows a sound signal per an experiment in full frequency spectrum, with time in minutes on an x-axis and frequency in kilohertz on a y-axis;

FIG. 8A is a schematic view of the passive acoustic gas wave generator installed in an example high-temperature gas pipe, establishing a high-temperature gas pipe assembly;

FIG. 8B is a perspective view of the high-temperature gas pipe assembly;

FIG. 9 presents photographs of a prototype of a high-temperature gas pipe and a passive acoustic gas wave generator;

FIG. 10 is a graph of experimental data for the prototype of FIG. 9, with flow rate in kilograms per second on an x-axis and peak frequency in kilohertz on a y-axis;

FIG. 11 is an enlarged view of a single cavity of an embodiment of corrugations of the passive acoustic gas wave generator;

FIG. 12 shows a two-dimensional axisymmetric computational domain and boundary condition for simulation purposes;

FIG. 13A is a graph of pressure distribution per an example mesh convergence study for y = 0.010 $m,$ with axial position in meters on an x-axis and pressure in pascal on a y-axis;

FIG. 13B is a graph of pressure distribution per an example mesh convergence study for y = 0.002 $m,$ with axial position in meters on an x-axis and pressure in pascal on a y-axis;

FIG. 14A is a schematic of a finalized mesh per an example;

FIG. 14B is an enlarged view taken at the circle denoted in FIG. 14A;

FIG. 15A shows a graph of pressure contours and distribution along a tube body with corrugations per an example simulation, with axial position in meters on an x-axis and pressure in pascal on a y-axis;

FIG. 15B shows a graph of pressure contours and distribution along a tube body with corrugations per an example simulation, with axial position in meters on an x-axis and pressure in pascal on a y-axis;

FIG. 15C shows a graph of pressure contours and distribution along a tube body with corrugations per an example simulation, with axial position in meters on an x-axis and pressure in pascal on a y-axis;

FIG. 16A is a graph of pressure variation over time per the example simulation, with time in seconds on an x-axis and pressure in pascal on a y-axis;

FIG. 16B is a graph of frequency spectrum per the example simulation, with frequency in hertz on an x-axis and magnitude on a y-axis;

FIG. 17A shows graphs of velocity-frequency relationship per an example simulation, with time in seconds on an x-axis and pressure in pascal on a y-axis; and

FIG. 17B shows graphs of velocity-frequency relationship per an example simulation, with frequency in hertz on an x-axis and magnitude on a y-axis.

DETAILED DESCRIPTION

An embodiment of a passive acoustic gas wave generator 10 is presented, as well as an embodiment of a tube-in-tube construction 12 of the passive acoustic gas wave generator 10 and a high-temperature gas pipe 14 with respect to each other. The passive acoustic gas wave generator 10 is a component of a larger acoustic gas flow meter assembly 16. The tube-in-tube construction 12 eases installation of the acoustic gas flow meter assembly 16 in application and use, which can be particularly arduous in applications exhibiting harsh and extreme conditions. Overall adaptation and flexibility of the acoustic gas flow meter assembly 16 amid installation is therefore enhanced. Unlike certain past flow meters, the tube-in-tube construction 12 has been shown to not require gas flow conditioning prior to making gas flow rate measurements, per certain embodiments, and hence can be installed at locations previously unavailable such as in close proximity and immediately downstream of pipe elbow constructions and in lengthened straight pipe constructions. Breaking a gas flow boundary layer - as has been needed in certain past flow meters - is not a requisite for use of the acoustic gas flow meter assembly 16 according to at least some embodiments described herein. Moreover, installation of the acoustic gas flow meter assembly 16 and its tube-in-tube construction 12 has proven relatively non-intrusive compared to certain past flow meters. Indeed, in nuclear power reactor applications in particular, installation per embodiments herein is generally free of in-core complex electronic devices and free of other significant in-core modified constructions. Commonly-sized components such as the passive acoustic gas wave generator 10 can be employed with differing gas pipe diameters. Lastly, as a result of a robust and durable design and construction, removal and uninstallation after prolonged use and lifetime of the acoustic gas flow meter assembly 16 is minimized or altogether avoidable, which can be an onerous and costly endeavor.

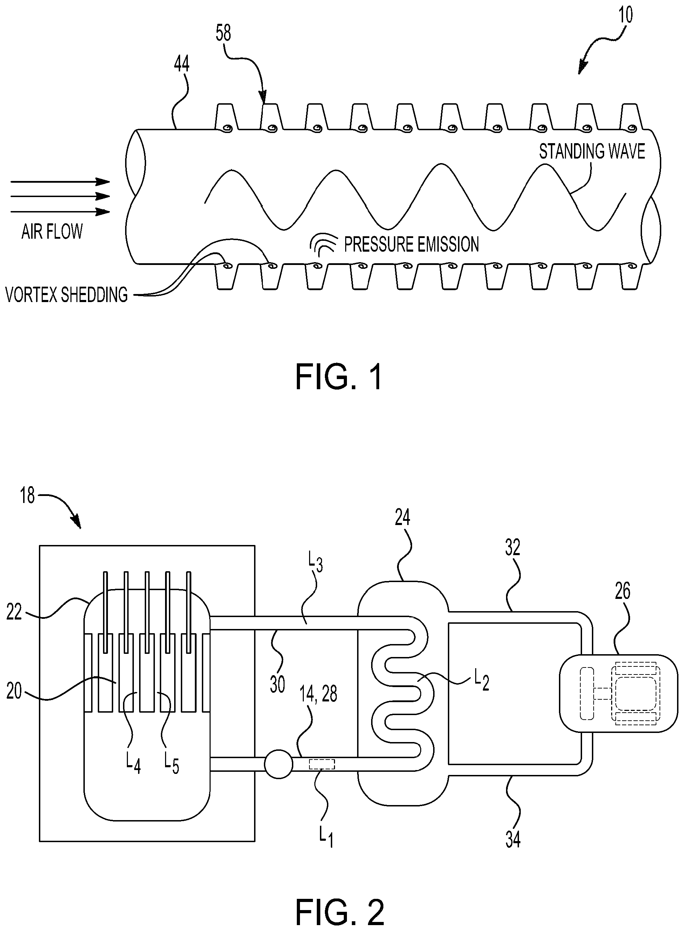

The acoustic gas flow meter assembly 16 can be employed in use in a wide-range of applications. Its design and construction make the acoustic gas flow meter assembly 16 particularly suitable for measuring gas flow rates in applications exhibiting harsh and extreme conditions and environments, such as those with increased gas flow rates and increased operating temperatures, as well as those that utilize harsh chemicals, among others. With reference to FIG. 2, an example application of a high-temperature gas-cooled reactor (HTGR) 18 is presented. The HTGR 18 may be employed in use in a nuclear power reactor. High-temperature gas-cooled reactors, in general, operate under high gas flow rates (e.g., 10-15 m/s at nominal operating conditions), high temperatures (e.g., > 700°C), and demonstrate high neutron flux and gamma fields. The HTGR 18 in this example includes, as its primary assemblies and components, a reactor core 20, a reactor pressure vessel 22, a heat exchanger 24, and a steam generator 26. The reactor core 20 is housed in the reactor pressure vessel 22. Coolant, such as helium gas, is circulated around the reactor core 20. As will be appreciated by skilled artisans, the coolant extracts heat from the reactor core 20 and carries the heat to the heat exchanger 24 that is located remote of the reactor core 20. In this example, the coolant travels from the reactor core 20 and to the heat exchanger 24 via the high-temperature gas pipe 14 in the form of a hot gas duct 28, and returns to the reactor core 20 via a return gas duct 30. At the heat exchanger 24, heat is transferred from the coolant to another heat transfer medium, such as water. The heat produced within the reactor core 20 is used to drive the steam generator 26, according to this example. The water is circulated through the steam generator 26 via hot water duct 32 and return water duct 34. In this example application, the acoustic gas flow meter assembly 16 can be installed for use at a multitude of locations, including locations $L_1$, $L_2$, $L_3$, $L_4$, and $L_5$, among other possibilities. Location $L_1$ is an example of a lengthened straight pipe construction, and location L$_2$ is an example of a pipe elbow construction. Still, other applications and purposes are possible including, but not limited to, chemical processing facilities, petrochemical plants, semiconductor chip manufacturing plants, among many other possibilities.

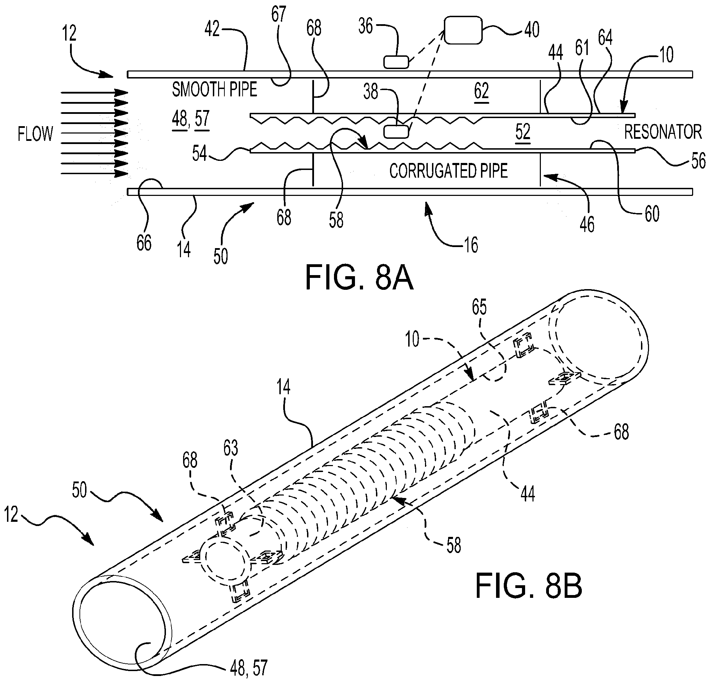

The acoustic gas flow meter assembly 16 can vary in its design, construction, and components according to different embodiments, and could have more, less, and/or different components than those described herein. In the embodiment presented in FIG. 8a, the acoustic gas flow meter assembly 16 includes the passive acoustic gas wave generator 10, an acoustic emission sensor 36, a temperature sensor 38, and a data acquisition and signal processing and control system 40. The acoustic emission sensor 36 and temperature sensor 38 are electrically coupled to the control system 40, and electrically communicates therewith. The acoustic emission sensor 36 can be located and mounted at least near the passive acoustic gas wave generator 10, and according to this embodiment is located at an outside surface 42 of the high-temperature gas pipe 14. The acoustic emission sensor 36 is located external of the passive acoustic gas wave generator 10 and hence external of the gas flow stream traveling therethrough. The acoustic emission sensor 36 serves to detect and monitor acoustic emission signals generated at the passive acoustic gas wave generator 10. The acoustic emission sensor 36 can be a microphone or could be some other type and kind of sound capturing device or acoustic emission sensor in other embodiments.

The temperature sensor 38 can be located and mounted at least near the passive acoustic gas wave generator 10, and according to this embodiment is located within an interior and within a tube gas flow passage (subsequently introduced) of the passive acoustic gas wave generator 10. The temperature sensor 38 serves to measure the temperature at its location, in this embodiment at the interior of the passive acoustic gas wave generator 10. At the interior of the passive acoustic gas wave generator 10, the temperature measured is indicative of the temperature of the gas flow stream traveling therethrough. The temperature sensor 38 can be a thermocouple per an embodiment, and can be of varying types and kinds of temperature sensors in varying embodiments; other examples include a resistance temperature detector, thermistor, and infrared temperature sensor. Further, there could be multiple temperature sensors according to an embodiment; for instance, a first temperature sensor could be located near an inlet opening (subsequently introduced) of the passive acoustic gas wave generator 10, and a second temperature sensor could be located near an outlet opening (subsequently introduced) of the passive acoustic gas wave generator 10. The control system 40 serves as a controller in the larger acoustic gas flow meter assembly 16 The control system 40 can be programmed to calculate and determine the rate of gas flow, or velocity, through the passive acoustic gas wave generator 10 based on data generated and provided to the control system 40 by the acoustic emission sensor 36 and temperature sensor 38. The control system 40 can be of varying types and kinds of controllers in varying embodiments.

The passive acoustic gas wave generator 10 can have varying designs, constructions, and components according to different embodiments, some of which may be dictated by its particular application of use. In the embodiment of FIGS. 8a and 8b, the passive acoustic gas wave generator 10 includes a tube body 44 and a support structure 46. As depicted, the passive acoustic gas wave generator 10 is located and situated within an interior 48 of the high-temperature gas pipe 14. The two components, according to this configuration, constitute a high-temperature gas pipe assembly 50. The tube body 44 establishes and defines a tube gas flow passage 52 at its interior. The tube gas flow passage 52 spans between a pair of open ends, an inlet opening 54 and an outlet opening 56. The tube gas flow passage 52 constitutes a single and sole gas flow passage of the passive acoustic gas wave generator 10. Gas flow travels from the inlet opening 54 and to the outlet opening 56 as it makes its way through the tube body 44. With respect to a pipe gas flow passage 57 of the high-temperature gas pipe 14, the tube gas flow passage 52 is positioned and located generally centrally thereof. Without intending to be restricted to a particular theory of causation, it is currently believed that this central location of the tube gas flow passage 52 relative to the pipe gas flow passage 57 facilitates installation of the passive acoustic gas wave generator 10 at locations previously unavailable such as in close proximity and immediately downstream of pipe elbow constructions and in lengthened straight pipe constructions.

Furthermore, the tube body 44 has a multitude of corrugations 58 that reside at an inner surface 60 of the tube body 44 - in this regard, the passive acoustic gas wave generator 10 can constitute a corrugated pipe configuration. The corrugations 58 can cause and induce a phenomenon known-as vortex shedding within the gas flow stream that passes through the tube gas flow passage 52. Shed vortices, in turn, produce pressure fluctuations that can be radiated as acoustic signals. The acoustic signals, or acoustic emissions, vary with the velocity of the gas flow stream. The corrugations 58 can vary in their design and construction according to different embodiments, and can be tuned to furnish acoustic emissions exhibiting discernable variations over desired ranges of gas flow rates, based in part or more upon the application. The corrugations 58 can be tuned per varying embodiments in terms of their quantity, size, shape, spacing with respect to one another, cross-sectional shape, height, depth, length, as well as other physical and geometric properties. In the embodiment of FIGS. 8a and 8b, the corrugations 58 are established by alternating channels and ridges that are regularly spaced and extend parallel to one another over a portion of the inner surface 60. As used herein, the term "corrugation" and its grammatical variations are intended to have an expansive meaning that refers to varying structures and formations capable of producing vortex shedding or otherwise contributing to the generation of acoustics of gas flow thereat; examples include ribs, ridges, grooves, channels, and contours, among other possibilities.

Moreover, it has been found that one or more smooth sections over a portion and extent of the inner surface 60 may be beneficial to vortex shedding and acoustic emission generation that take place at the corrugations 58, and/or to overall performance of the acoustic gas flow meter assembly 16, per certain embodiments; still, the smooth sections could have other beneficial effects. The smooth section(s) can be disposed over a portion of the inner surface 60 upstream with respect to the corrugations 58, downstream with respect to the corrugations 58, or both upstream and downstream of the corrugations 58 (the terms "upstream" and "downstream" are used with reference to the movement and direction of gas flow stream through the tube gas flow passage 52 from the inlet opening 54 and to the outlet opening 56). In the example of FIG. 8A, a smooth section 61 resides downstream of the corrugations 58 and adjacent the outlet opening 56 and spans to the outlet opening 56. In the example of FIG. 8B, a first smooth section 63 resides upstream of the corrugations 58 and adjacent the inlet opening 54 and spans to the inlet opening 54, and a second smooth section 65 resides downstream of the corrugations 58 and adjacent the outlet opening 56 and spans to the outlet opening 56. Still, in some embodiments the inner surface 60 can lack the smooth sections.

Furthermore, an annular clearance 62 resides and is defined between an outer surface 64 of the tube body 44 and an inside surface 66 of the high-temperature gas pipe 14. The annular clearance 62 spans a full longitudinal extent of the tube body 44 taken between the inlet and outlet openings 54, 56 thereof. Gas flow travels through the annular clearance 62. The support structure 46 serves to position the tube body 44 at an approximate central location within the interior 48 of the high-temperature gas pipe 14. At the annular clearance 62 and at a location of installation of the passive acoustic gas wave generator 10, the inside surface 66 of the high-temperature gas pipe 14 has a smooth section 67. The smooth section 67 may facilitate proper utilization of the acoustic gas flow meter assembly 16.

The support structure 46 can vary in its design and construction according to different embodiments. In the embodiment of FIGS. 8a and 8b, the support structure 46 takes the form of a multitude of fins 68. Here, there are eight in total: four situated near the inlet opening 54 and four similarly situated near the outlet opening 56; still, in other embodiments other quantities are possible. The fins 68 extend from the outer surface 64 of the tube body 44 and extend to the inside surface 66 of the high-temperature gas pipe 14. The fins 68, per this embodiment, are designed and constructed to not substantially obstruct gas flow travel through the annular clearance 62. In other embodiments, the fins 68 can have varying designs, constructions, and components.

Furthermore, in various embodiments, the passive acoustic gas wave generator 10 can be composed of a silicon carbide material, and the high-temperature gas pipe 14 can be composed of a silicon carbide material; still, other material compositions are possible and the two components need not necessarily be composed of the same material. The passive acoustic gas wave generator 10 and the high-temperature gas pipe 14 can constitute a unitary and one-piece structure, per an embodiment. In an embodiment, the passive acoustic gas wave generator 10 and the high-temperature gas pipe 14 can be made by an additive manufacturing fabrication process, can be made by a sintering process, or can be made by some other manufacturing technology and technique. Indeed, when composed of the same material and constituting a unitary and one-piece structure, the passive acoustic gas wave generator 10 and the high-temperature gas pipe 14 can be made concurrently by the same additive manufacturing fabrication process.

Yet further, the acoustic gas flow meter assembly 16, per at least some embodiments, is low-intrusive and free from in-core electronic devices of past flow meters. Unlike certain past flow meters, the acoustic gas flow meter assembly 16 utilizes acoustic-flow interaction to measure the flow rate reversely. In an embodiment, the sound pipe is used as the design basis for acoustic gas flow meter assembly 16.

A schematic illustration is shown in FIG. 1 for demonstrative purposes. When gas flows into a corrugated pipe, flow separation occurs on the upstream edge of each cavity, leading to the generation of a vortex flowing downstream. The vortex that sheds from the upstream edge and breaks on the downstream wall induces an unsteady force periodically, which is the source of the sound in the mainstream. This sound source provides acoustic energy to the mainstream, resulting in a longitudinal acoustic wave. This pressure oscillation also controls the vortex shedding in return, consequently forming a self-sustained acoustic change. According to one early observation, the audible frequency was correlated to the natural harmonics of the tube. Later however, it was concluded that the whistling was due to the feedback mechanism from the flow-acoustic interaction, and the frequency was not necessarily the same as the pipe resonance frequency.

As mentioned, per an embodiment, using a sound pipe does not call for significant modifications to reactor core internals. The actual sensing can be accomplished without interfering with the flow and potentially on the outside surface of the reactor pressure vessel, per an embodiment. It could instead simplify the internals of the reactor core and thus enhance the reactor safety in such an application.

Herein, the possibility of using a corrugated pipe is exploited for acoustic flow meter experimentally. The details about the experiments are presented, along with a proposed acoustic flow meter prototype per an embodiment. Then the URANS simulation with CFD code, as a design and optimization tool, was also validated against the experimental data from literature and compared with LES simulation.

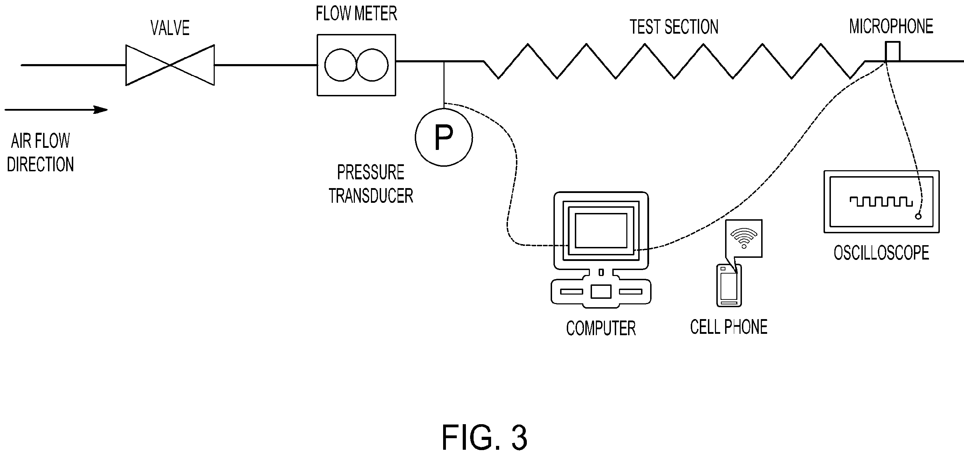

An experimental facility was constructed to understand the behavior of a corrugated pipe. A schematic of the experimental setup is depicted in FIG. 3. The test facility was composed of an air compressor that sent compressed air to the test section. A flow meter was installed to measure the flow rate and gas temperature in between the air compressor and test section. In the example experiment, the flow meter was an Endress + Hauser Promass 63M; still, other flow meters can be used in other experiments. The flow rate was changed by adjusting the valve before the flow meter. The end of the test section was open to the room environment. The sound signal was obtained from a microphone. In he example experiment, the microphone was a miniDSP UMIK1 microphone (NATAL-MR-PN-8748133); still, other microphones can be used in other experiments. The microphone transferred the signal to the computer for analysis. In addition, an oscilloscope and a smartphone with an instant spectrum analysis application (dB meter) were utilized for the assistance of on-site spectrum visualization during experimental runs.

A corrugated pipe with a length of forty-seven inches was used in this example experiment. The corrugated pipe was made out of polyethylene and had a one-inch outer diameter. Its cavity width and height were 2 millimeters (mm) and 1.7 mm, respectively, with a 4 mm pitch. Since the edge was too small to be measured, it was assumed to be a sharp edge. The test section consisted of a rigid PVC pipe with a one-inch inner diameter containing the corrugated pipe. The corrugated pipe was inside the PVC pipe to avoid bending and deformation. Still, other corrugated pipes with other physical and geometric specifications could be used in other example experiments.

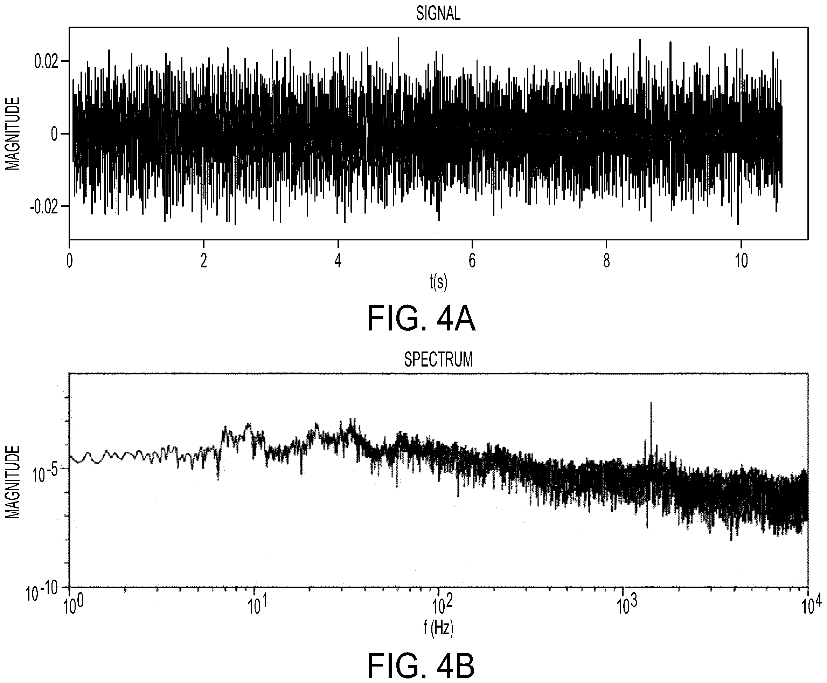

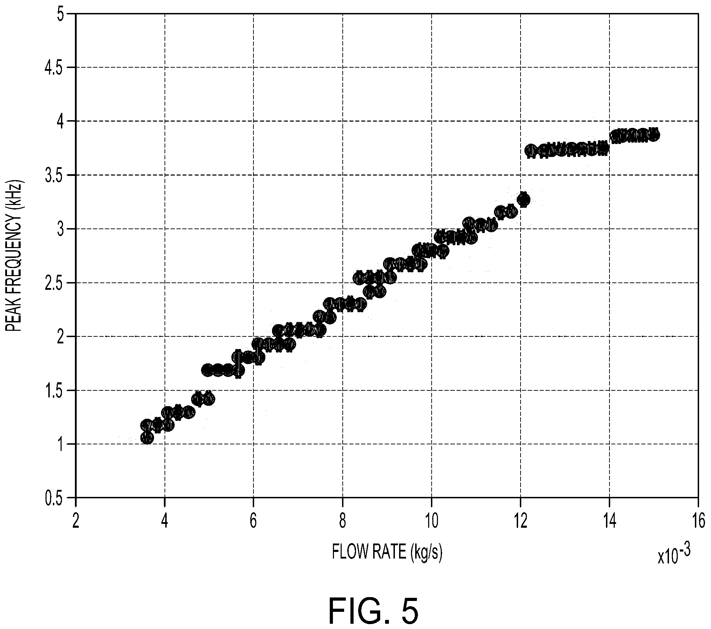

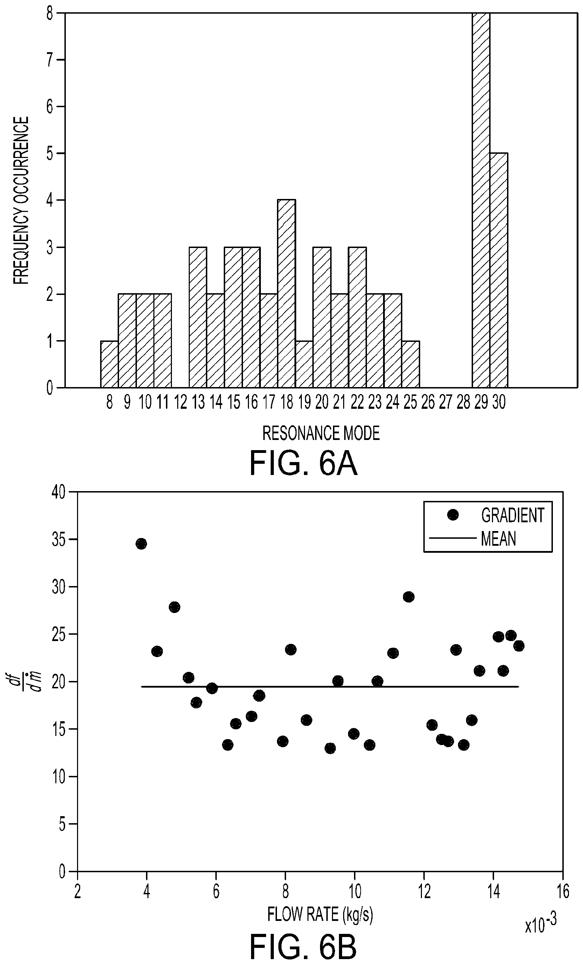

The example experiment was conducted by manually adjusting the valve to control the air's mass flow rate. For each run, signals were recorded for 10 seconds after establishing stable flow conditions. A typical recorded signal and its frequency spectrum for $\dot{m} = 4.898 \times 10^{-3}$ kg/s is shown in FIGS. 4A and 4B. The spectrum shows a single large peak frequency, $f$, of 1.420 kHz. The measurement uncertainty for the flow rate is less than 0.5%, according to the flow meter specification. Each measurement under the same flow rate was repeated three times to consider the influence of the gas temperature variation. FIG. 5 demonstrates the obtained peak frequency versus flow rate relationship. The first flow rate recorded here corresponds to the first audible frequency, and the Reynolds number is estimated to be $Re = 10, 055$. When the flow rate develops, the peak frequency does not increase smoothly. As shown in FIGS. 6A and 6B, several plateaus are present. It is understandable if considering that as the velocity increases, the impingement of the vortex on edge is stronger, strengthening the emitted acoustic source, and thus providing enough energy for an acoustical wave to jump into the next level of pipe harmonics.

To design a flow meter, this non-monotonic relationship between flow rate and frequency can later be eliminated through optimization to achieve higher measurement resolution. Investigation to predict this frequencyjumping phenomenon in corrugated pipe have led to various theories. In short, most of them related the jumping with the pipe harmonics. One of the often-used models formulated the frequency as (Eqn. 1):

$$f_n = \frac{nc}{2L'} \frac{(1 - M^2)}{1 + \left(\frac{d_c}{R_{int}}\right)\left(\frac{l_c}{p_c}\right)\left(1 + \frac{d_c}{2R_{int}}\right)}$$

where n is the nth harmonic mode, c is the speed of sound, L' = L + 1.2R$_{int}$ is the corrected tube length and $R_{int}$ is the internal radius of the tube. Further, $l_c$ is the length of corrugation, $d_c$ is the depth of corrugation, $p_c$ is the pitch of corrugation, $M$ is the Mach number. It was proposed that if $M^2 \ll 1$, then Eqn. 1 can be approximated as (Eqn. 2):

$$f_n = 0.89 \frac{nc}{2L'}$$

Based on the formula in Eqn. 2, the histogram for the peak frequency from the first set of measurements is plotted and shown FIG. 6A. The frequency bins here have been selected corresponding to the $n$th modes. From the histogram, the first audible frequency locates in between the 8th and 9th modes. In addition, there is no frequency observed between the 12th and 13th modes as well as between 26th and 29th modes. This discontinuity on the mode number according to the example experiment can signify that the proposed model could be subject to further improvement, as the currently available models predict that the modes are continuous. However, to develop a flow meter, the resolution in the plateau regions may be of greater concern. What is optimistic here is that within the plateau, a slight increment of frequency is still happening, which is better illustrated by the plot in FIG. 6B. It shows the gradient of peak frequency to the flow rate for the points only in the plateau regions. Even though the gradient does not maintain the same value as the flow rate increases, it is noticeable that the average of the gradient is around 19, as indicated by the horizontal line, and the gradient has been positive for all the measured points. Still, other example experiments may yield other results.

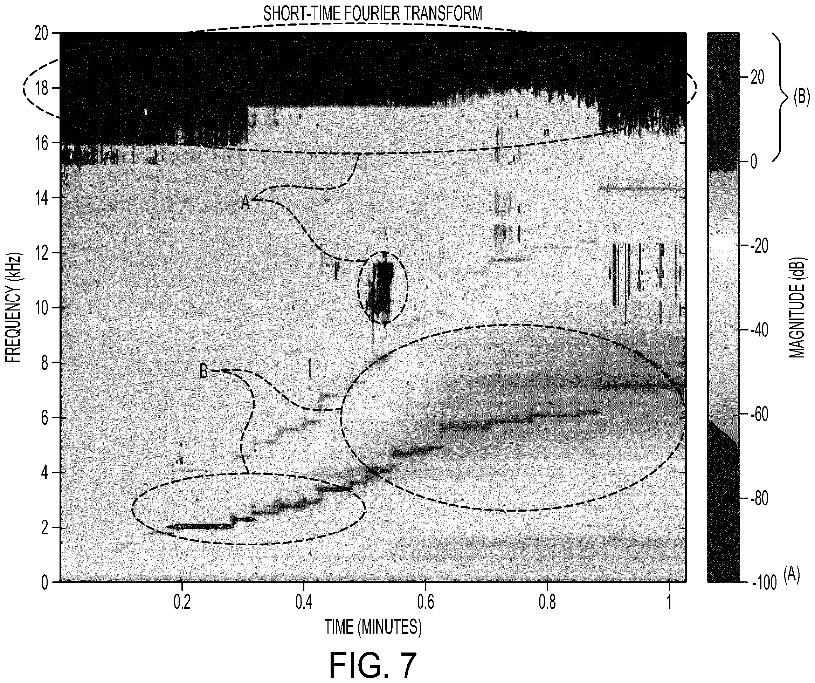

To check the transient acoustic-flow characteristics, an experiment was then performed by opening the valve continuously to get the frequency spectrum. The sound signal was recorded for one minute with the growth of the flow rate. Then a short-time Fourier transform was adapted to analyze the signal. FIG. 7 shows the sound signal in the frequency domain (demarcations A and B in FIG. 7 are intended as approximate indications of respective magnitudes). Here, the increase of time corresponds to the growth of flow rate. Like the steady-state experiment, though overall the peak frequency increases in time, plateaus still show up for specific periods (certain flow ranges). As can be observed from the spectrum, instead of having only a single dominant frequency at one flow rate, one or two higher mode frequencies also follow the same trend as the most dominant frequency. After around 0.9 min, the frequency remains the same magnitude, which is caused by the air supply reaching the maximum flow rate. The overall response of the corrugated pipe to flow change here made a good example of applying it to the transient scenario. As a closing mark here, the observation so far has indicated the good flow-frequency response for the corrugated pipe. Yet, it may be desirable in certain embodiments to improve the resolution by either tuning the geometry parameters or combing the corrugated pipe with an additional setup.

It has been observed that adding a smooth pipe upstream or downstream of the corrugated pipe will have an effect on the peak frequency. It has been found that a higher flow was required to initiate the whistle after adding a longer smooth pipe before the corrugated pipe, and no whistling would happen when the smooth front pipe was longer than 100 mm. To investigate the influence of the upstream and downstream extensions of the corrugated pipe on the whistling frequency, a 31-inch smooth pipe was connected with the same diameter to the exit of the corrugated pipe, then a set of runs was performed for different flow rates. The comparison has shown a change of peak frequency due to the presence of the smooth pipe. The maximum relative change was about 7.7%.

The influence of the smooth pipe on the whistling can come from several factors, it is currently believed. Since the whistle is caused by the coupling between pipe acoustical resonance and vortex shedding, adding a longer tube will effectively increase the resonance length. On the other hand, this will also influence the velocity profile near the wall region. As vortex formation, shedding, and impinging on the edge of the cavity rely heavily on the velocity profiles, changing the velocity profile will alter the source strength, thus the whistle frequency. It then suggests separating the corrugated pipe from the piping system. A tube-in-tube configuration is thus proposed here as an optimization, as previously described, and an embodiment of which is illustrated in FIGS. 8A and 8B. The corrugated section needed to generate the acoustic wave is mounted inside the main circulation pipe. An undisturbed inlet will be established in this way, and the corrugated section that establishes an acoustic wave will be independent of the piping system, according to this embodiment.

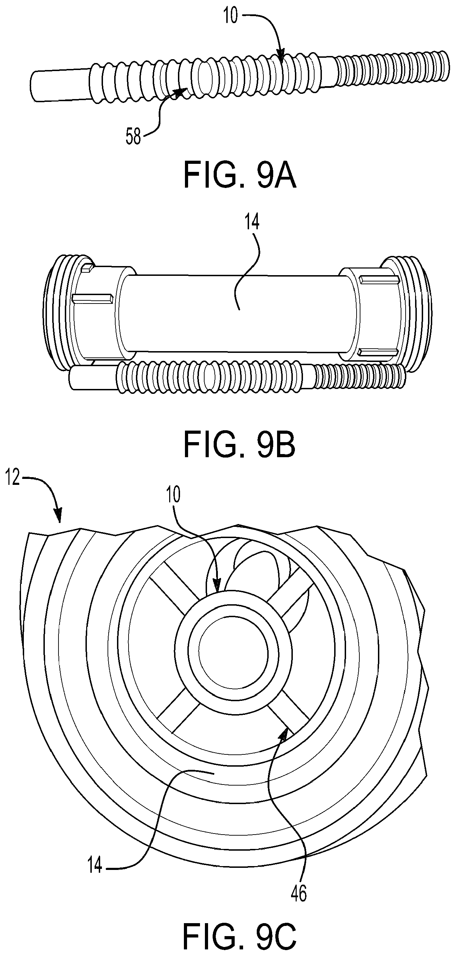

To experimentally prove the feasibility of this tube-in-tube construction, straw-shaped corrugated pipe fixed with two holders was fit into a one-inch pipe, per this example experiment. FIGS. 9A-9C show schematics of those components. In FIG. 9A, the corrugated pipe had a 10mm inner diameter and a total length of about 150mm. The pitch was approximately 4.72mm for the single cavity, and the height was about 1.5mm. These dimensions were from a caliper with a resolution of 0.01mm. A one-inch PVC pipe was used as the outer tube, and the corrugated pipe was mounted into the outer tube by using the 3D printed supports shown in FIGS. 9B and 9C. The whole piece together represented an initial design of the acoustic flow meter. Validation of the independence from the system for this geometry was then accomplished through measurements with varying upstream and downstream smooth pipes. Still, in other example experiments other corrugated pipes with other dimensional values are possible.

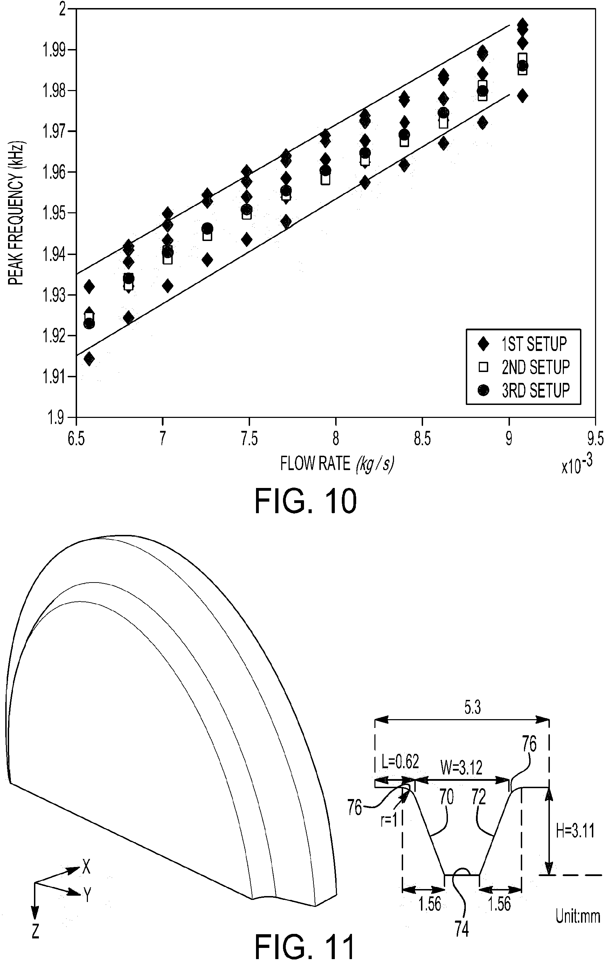

For the example experimental test, two smooth pipes with a length of 48.5 inches and 24 inches were used. The first set of steady-state experiments were performed with a 48.5-inch pipe upstream of the test flow meter. The second set of experiments had an additional 24-inch pipe installed upstream. For the third set of experiments, the 24-inch pipe was then taken to the exit of the flow meter. Since the flow stability and room temperature were of significance on the measurement uncertainty, the first set of experiments was repeated six times on different days to yield an experimental uncertainty bar. FIG. 10 presents all the peak frequencies measured within a single plateau region for all three setups, according to these example experiments. The diamond symbol represents the first setup, and the square symbol represents the second setup, with the solid circle standing for the third setup. It can be seen from the plot that the frequency grows with the increase of flow rate, and all the measured data locates within the line bounds formed by the diamond symbols. Since the maximum relative variation in the bound is less than 1%, it shows that this geometry has suitable system-independent property. Still, other example experiments may yield other results.

A suitable tool is called for, per certain embodiments, when it is desired to optimize the frequency-flow relationship, such as removing the plateau. URANS simulation can be employed for this purpose. Modeling of friction loss in a corrugated pipe using RANS simulation has been validated against empirical formulas and experiments. A hybrid computational aeroacoustic method has been observed, where the SST $k$ - $\omega$ model was combined with vortex sound theory to estimate acoustic source power from a single cavity in a pipe flow. This method has been modified for increased prediction of the acoustic power. It is currently believed that there is no direct validation for URANS simulation on a full-length corrugated pipe. Thus, a CFD simulation of the flow in a corrugated pipe has been performed to investigate whether URANS simulation can capture this whistling phenomenon.

An example corrugated pipe geometry was used for the simulation. FIG. 11 shows the geometry specifications of the single cavity of the corrugated pipe. The single cavity can constitute a single corrugation of the multitude of corrugations 58, according to an embodiment. The single corrugation has a first side wall 70, a second side wall 72, and an end wall 74. The first side wall 70 is slanted at an obtuse angle with respect to the end wall 74, and the second side wall 72 is similarly slanted at an obtuse angle with respect to the end wall 74. The end wall 74 is planar. Adjoining ends 76 of the first and second side walls 70, 72 are rounded according to this embodiment. In the example of FIG. 11, the diameter of the inner pipe was 25.4mm. The depth and width of each cavity were 3.11 mm and 4.68 mm, respectively. The pitch of the cavity was 5.3mm, and the total pipe length was 614 mm. A total of 116 cavities were present in the corrugated section, according to this example simulation. Still, other cavities of other geometries are possible in other embodiments.

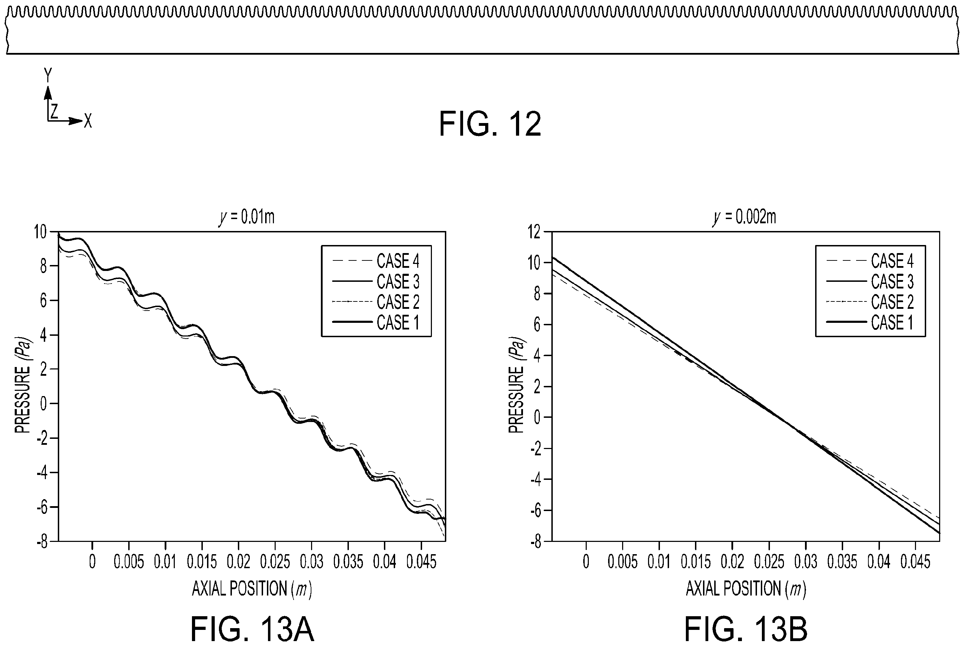

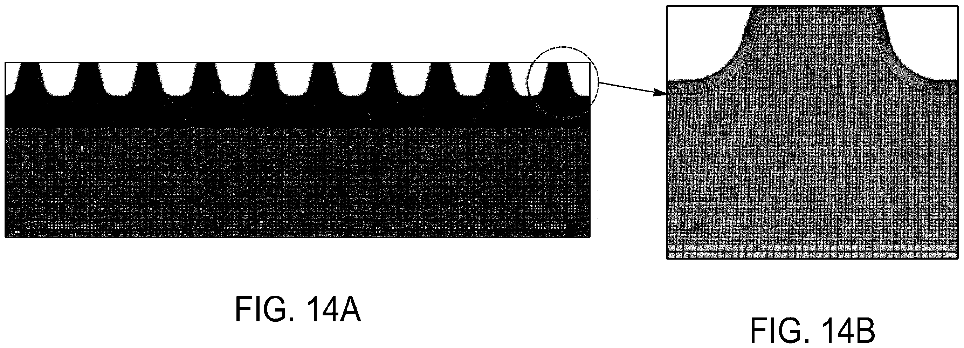

A two-dimensional (2D) axisymmetric computational domain was used to save computational resources, as shown in FIG. 12. The inlet boundary condition was set as mass flow inlet, while the outlet was set as outlet boundary. The SST $k$ - $\omega$ model was employed for the simulation. The case with an average inlet velocity equal to 18 $m/s$ was selected since this case has also been simulated through LES simulation; the corresponding mass flow rate for this 2D model was estimated to be 0.00158 $kg/s$. The mesh convergence study was conducted for only ten corrugations by imposing periodic boundary conditions across the domain. Firstly, four steady-state cases with increased global mesh refinement were carried out. Four line probes at different radial locations were used to monitor the axial pressure distribution. FIGS. 13A and 13B show the pressure distribution along the axial direction at $y = 0.010m$ and $y = 0.002m$ respectively, with the original point on the inlet center axis. Good mesh convergence is observed. Since the acoustic modeling has a high demand on the mesh resolution, the finest mesh (case 4 with $0.625 \times 10^{-4}$ $m$ cell size) was selected for the follow-up simulation. In addition, since the edge area of the cavity is the source for pressure fluctuation, additional local refinement was implemented in the proximity of the cavities to have a high enough mesh cutoff frequency. The finalized mesh per this embodiment is presented in FIGS. 14A and 14B. Still, other example simulations may yield other results.

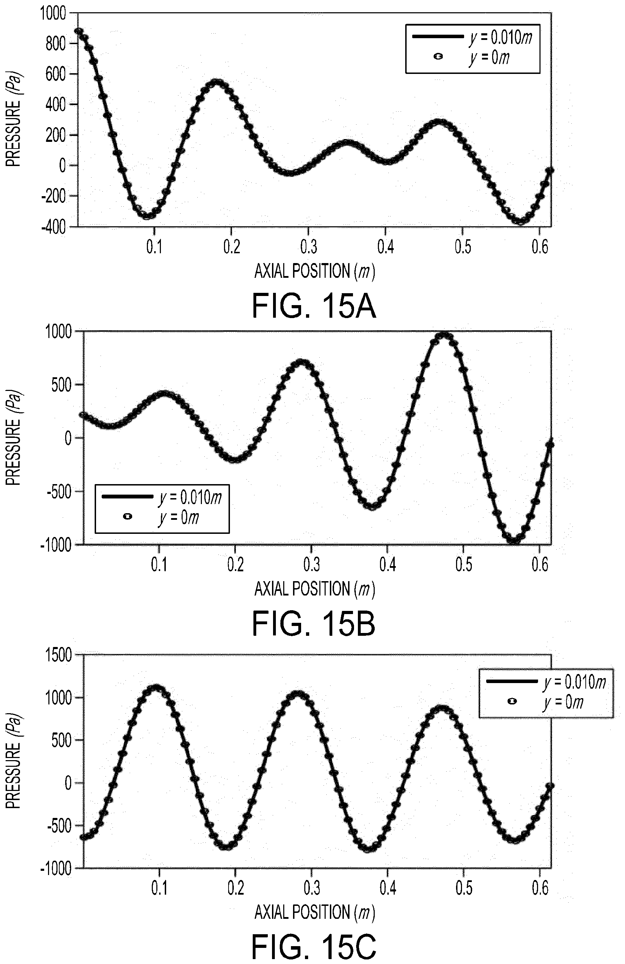

The transient simulation, per this example, was conducted with an interrogation time step of $10^{-6}$ s and a second-order scheme. Three point-probes were defined to monitor the pressure variation at the middle of the pipe ($y = 0.0137m$, $y = 0.0115m$, and $y = 0m$ respectively). In addition, the same line probes that were used for the mesh convergence study were used to show the axial pressure distributions at different radial locations. The simulation was run for 0.25s. In FIGS. 15A, 15B, and 15C, the pressure contours and the pressure distributions along the pipe at three different times are presented. The evolution of pressure distribution indicates the periodical change of pressure within the corrugated pipe. Still, other example simulations may yield other results.

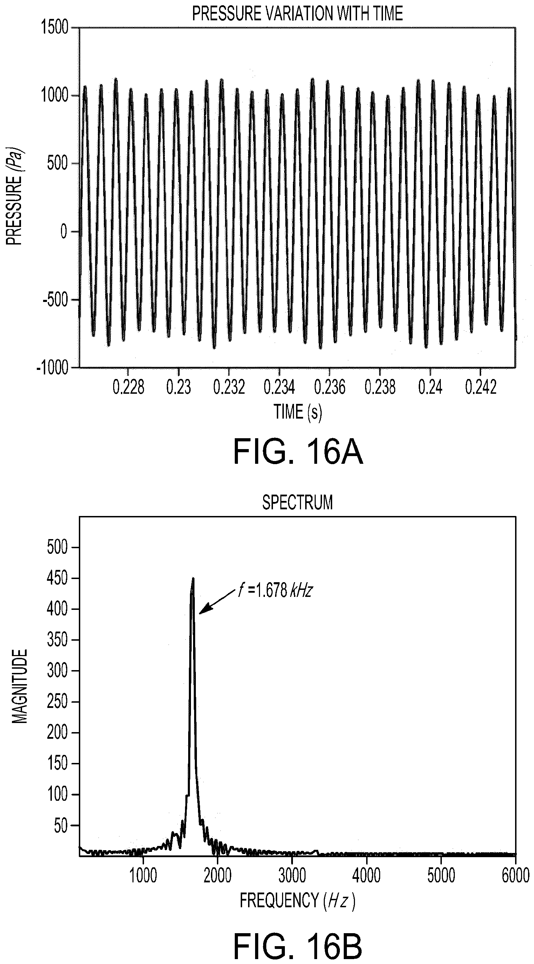

The time trace of the pressure at the three selected probes are presented in FIGS. 16A and 16B. A periodical pressure fluctuation can be observed at each location. The frequency spectrum was obtained by using the fast Fourier transform analysis (i.e., FIG. 16B). The computed frequency peak is 1.678kHz, which is smaller than the measured frequency in the experiment (1.978$kHz$). But it is observed that this computed frequency lies in between the sixth and seventh modes, and the measurement is on the eighth mode. The preliminary case here indicates that the simulation can capture the primary physical phenomenon well. In consideration of having the simulation more aligned with the actual facility and also avoiding the nonphysical inlet and outlet boundaries, two boxes were added to the pure corrugated geometry before further conducting the validation. The new simulation was then conducted with three different flow rates.

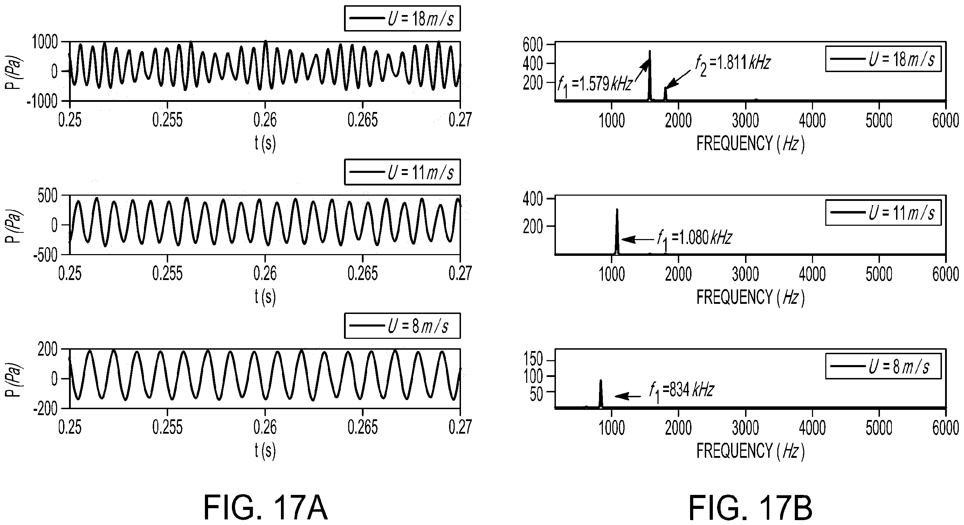

FIGS. 17A and 17B show the pressure variation and frequency spectrum from the three new cases. It is observed that, for the new U=18m/s case, the spectrum shows two dominant frequencies (1. 579 $kHz$ and 1. 811 $kHz$). The presence of the second dominance frequency hints that this velocity was in the transition of exciting flow into higher resonance mode. However, since a previously-known LES simulation reported only one dominant frequency and the experiment also recorded the most dominant frequency, the analysis of this second peak is limited. With the other two cases only having one dominant frequency (1.080$kHz$ and 0. 830$kHz$ respectively), the dominant frequency comparison is summarized in Table I below (comparison of velocity-frequency relationship). One conclusion here is that the 2D RANS simulation can reproduce the velocity-frequency trend but tends to predict a lower frequency compared to LES simulation and experiments. This is expected as the 2D modeling plus the RANS averaging will underestimate the energy generated by the vorticity near the wall, thus providing a lower acoustical source. Improving the accuracy of the URANS simulation may call for further exploration on the 3D model with various turbulence models. However, it can be concluded from here that the URANS simulation can capture the main physical phenomenon of whistling in the corrugated pipe. Still, other example simulations may yield other results, which in turn may yield other conclusions.

TABLE I

| Case | URANS Frequency (kHz) | LES Frequency (kHz) | EXP Frequency (kHz) |
|---|---|---|---|
| U=18m/s | 1.579 | 1.978 | 1.968 |
| U=11m/s | 1.080 | 1.273 | 1.230 |
| U=8m/s | 0.830 | 0.980 | 0.990 |

A system based on the corrugated pipes has been considered a potential candidate to design an acoustic flow meter for the high-temperature gas-cooled reactors, per at least some embodiments. An experimental study has shown that the peak frequency of the acoustic wave emitted by the pipe increases with the airflow rate, but not monotonically as there are specific flow rate ranges in which the frequency presents plateaus. In addition, it has been confirmed that adding a smooth pipe downstream or upstream of the corrugated section will cause a shift in the frequency of the acoustic wave under the same air flow rate conditions. The URANS simulation on the corrugated pipe has also been validated against the experiment. The simulation has successfully captured the primary physical process.

As used herein, the terms "general" and "generally" are intended to account for the inherent degree of variance and imprecision that is often attributed to, and often accompanies, any design and manufacturing process, including engineering tolerances - and without deviation from the relevant functionality and outcome - such that mathematical precision and exactitude is not implied and, in some instances, is not possible. In other instances, the terms "general" and "generally" are intended to represent the inherent degree of uncertainty that is often attributed to any quantitative comparison, value, and measurement calculation, or other representation.

It is to be understood that the foregoing description is of one or more preferred exemplary embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "for example," "e.g.," "for instance," and "such as," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation.

**Claims**

1. A passive acoustic gas wave generator of a gas pipe, the passive acoustic gas wave generator comprising:

   a tube body having a tube gas flow passage spanning between an inlet opening and an outlet opening, the tube body having a plurality of corrugations residing at an inner surface of the tube body; and
   a support structure extending from an outer surface of the tube body and extending to an inside surface of the gas pipe, the support structure locating the tube gas flow passage of the tube body generally centrally with respect to a pipe gas flow passage of the gas pipe.

2. The passive acoustic gas wave generator as set forth in claim 1, wherein an annular clearance resides between an outer surface of the tube body and the inside surface of the gas pipe, the annular clearance spanning a full longitudinal extent of the tube body.

3. The passive acoustic gas wave generator as set forth in claim 1 or 2, wherein the support structure comprises a plurality of fins extending from the outer surface of the tube body and extending to the inside surface of the gas pipe.

4. A high-temperature gas pipe assembly, comprising the gas pipe and the passive acoustic gas wave generator of any one of claims 1 to 3.

5. The high-temperature gas pipe assembly as set forth in claim 4, wherein the gas pipe is an additive-manufactured gas pipe and the passive acoustic gas wave generator is an additive-manufactured passive acoustic gas wave generator.

6. The gas pipe assembly as set forth in claim 4 or 5, wherein the gas pipe and the passive acoustic gas wave generator constitute a tube-in-tube construction.

7. An acoustic gas flow meter assembly comprising the passive acoustic gas wave generator of any one of claims 1 to 3.

8. The acoustic gas flow meter assembly as set forth in claim 7, further comprising: an acoustic emission sensor located at least adjacent the passive acoustic gas wave generator, and a temperature sensor located at least adjacent the passive acoustic gas wave generator.

9. The acoustic gas flow meter assembly as set forth in claim 8, further comprising a controller electrically coupled to the acoustic emission sensor and electrically coupled to the temperature sensor.

10. The passive acoustic gas wave generator any one of claims 1 to 3, wherein the tube body has at least one smooth section residing at the inner surface of the tube body, the at least one smooth section located upstream of the plurality of corrugations, downstream of the plurality of corrugations, or both upstream and downstream of the plurality of corrugations.

11. A tube-in-tube acoustic gas flow meter assembly of a gas pipe, the tube-in-tube acoustic gas flow meter assembly comprising:

a passive acoustic gas wave generator having a tube body and a support structure, a tube gas flow passage residing in the tube body and spanning between an inlet opening and an outlet opening, a plurality of corrugations disposed at an inner surface of the tube body, the support structure extending from an outer surface of the tube body and extending to an inside surface of the gas pipe, the support structure locating the tube gas flow passage of the tube body generally centrally with respect to a pipe gas flow passage of the gas pipe, wherein an annular clearance resides between an outer surface of the tube body and the inside surface of the gas pipe;
an acoustic emission sensor located at an outside surface of the gas pipe and adjacent the passive acoustic gas wave generator; and
a temperature sensor located within the tube gas flow passage.

12. The tube-in-tube acoustic gas flow meter assembly as set forth in claim 11, wherein the support structure comprises a plurality of fins extending from the outer surface of the tube body and extending to the inside surface of the gas pipe.

13. The tube-in-tube acoustic gas flow meter assembly as set forth in claim 11 or 12, further comprising a controller electrically coupled to the acoustic emission sensor and electrically coupled to the temperature sensor.

14. The tube-in-tube acoustic gas flow meter assembly as set forth in any one of claims 11 to 13, further comprising the gas pipe, wherein the gas pipe has a smooth section residing at the inside surface thereof at least adjacent a location of the passive acoustic gas wave generator.

15. A tube-in-tube acoustic gas flow meter assembly of a gas pipe, the tube-in-tube acoustic gas flow meter assembly comprising:

a passive acoustic gas wave generator having a tube body and a plurality of fins, a tube gas flow passage residing in the tube body and spanning between an inlet opening and an outlet opening, a plurality of corrugations disposed at an inner surface of the tube body, the plurality of fins extending from an outer surface of the tube body and extending to an inside surface of the gas pipe, the plurality of fins locating the tube gas flow passage of the tube body generally centrally with respect to a pipe gas flow passage of the gas pipe, wherein an annular clearance resides between an outer surface of the tube body and the inside surface of the gas pipe;
an acoustic emission sensor located at an outside surface of the gas pipe and adjacent the passive acoustic gas wave generator;
a temperature sensor located within the tube gas flow passage;
a controller electrically coupled to the acoustic emission sensor and electrically coupled to the temperature sensor; and
the gas pipe, the gas pipe having a smooth section residing at the inside surface thereof at least adjacent a location of the passive acoustic gas wave generator.

FIG. 1

FIG. 2

FIG. 3

EP 4 428 499 A1

## FIG. 4A

## FIG. 4B

EP 4 428 499 A1

FIG. 5

FIG. 6A

FIG. 6B

FIG. 7

FIG. 8A

FLOW

SMOOTH PIPE

48, 57

CORRUGATED PIPE

RESONATOR

FIG. 8B

EP 4 428 499 A1

10

58

FIG. 9A

14

FIG. 9B

12

10

14

46

FIG. 9C

FIG. 10

FIG. 11

FIG. 12

FIG. 13A

FIG. 13B

FIG. 14B

FIG. 14A

FIG. 15A

FIG. 15B

FIG. 15C

PRESSURE VARIATION WITH TIME

## FIG. 16A

SPECTRUM

$f = 1.678\ kHz$

## FIG. 16B

FIG. 17A

FIG. 17B

Europäisches
Patentamt
European
Patent Office
Office européen
des brevets

# EUROPEAN SEARCH REPORT

**Application Number**

EP 24 16 1334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIAXIN MAO ET AL: "On the Development of a Novel Acoustic Flowmeter for High-Temperature Gas-Cooled Reactors", NUCLEAR TECHNOLOGY, [Online] vol. 209, no. 10, 1 November 2022 (2022-11-01), pages 1565-1576, XP093183782, US ISSN: 0029-5450, DOI: 10.1080/00295450.2022.2133505 Retrieved from the Internet: URL:https://www.tandfonline.com/doi/full/10.1080/00295450.2022.2133505> [retrieved on 2024-07-04] | 1-7,10 | INV. G01F1/32 G01F1/66 G01F15/04 |
| Y | * abstract * * page 1569, left-hand column, last paragraph - page 1571, left-hand column, last paragraph * * figures 1-3, 8, 9a-9c * | 8,9, 11-15 | |
| Y | US 2021/396554 A1 (CETINER MUSTAFA S [US] ET AL) 23 December 2021 (2021-12-23) * paragraph [0063] * * figures 2,5 * | 8,9, 11-15 | **TECHNICAL FIELDS SEARCHED (IPC)** G01F |
| X | GB 2 082 322 A (UNIV MANCHESTER) 3 March 1982 (1982-03-03) | 1,2,7,10 | |
| Y | * page 2, line 59 - line 62 * * figures 2,3 * | 8,9, 11-15 | |
| A | | 3 | |
| A | GB 2 148 003 A (JOHNSON MATTHEY PLC) 22 May 1985 (1985-05-22) * page 3, line 5 - line 7 * * figure 1 * | 1,7-15 | |

The present search report has been drawn up for all claims

| Place of search | Date of completion of the search | Examiner |
|---|---|---|
| The Hague | 29 July 2024 | Verdoodt, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 16 1334

This annex lists the patent family members relating to the patent documents cited in  the above-mentioned European search report.
The members are as contained in the European Patent Office EDP file on
The European Patent Office is in no way liable for these particulars which are merely given for the purpose of information.

29-07-2024

| Patent document cited in search report | | Publication date | Patent family member(s) | Publication date |
|---|---|---|---|---|
| US 2021396554 | A1 | 23-12-2021 | NONE | |
| GB 2082322 | A | 03-03-1982 | NONE | |
| GB 2148003 | A | 22-05-1985 | NONE | |

EPO FORM P0459

For more details about this annex : see Official Journal of the European Patent Office, No. 12/82